# EUROPÄISCHE PATENTSCHRIFT

(11) **EP 0 744 050 B1**
(45) Veröffentlichungstag und Bekanntmachung des Hinweises auf die Patenterteilung: **27.08.1997**
(21) Anmeldenummer: 95906890.9
(22) Anmeldetag: 25.01.1995
(51) Int. Cl.: G06F 7/60, G05B 13/02

(54) **VORRICHTUNG ZUR SCHNELLEN VERARBEITUNG VON AUSGEWÄHLTEN FUZZY-REGELN**
DEVICE FOR THE FAST PROCESSING OF SELECTED FUZZY RULES
DISPOSITIF POUR LE TRAITEMENT RAPIDE DE REGLES SELECTIONNEES EN LOGIQUE FLOUE

(30) Priorität: 11.02.1994 DE 4404427
(43) Veröffentlichungstag der Anmeldung: 27.11.1996
(73) Patentinhaber: SIEMENS AKTIENGESELLSCHAFT, 80333 München (DE)
(72) Erfinder: EICHFELD, Herbert, Dr., 80538 München (DE); KÜNEMUND, Thomas, Dr., 80337 München (DE)
(86) Internationale Anmeldenummer: DE9500114
(87) Internationale Veröffentlichungsnummer: WO9522100

(56) Entgegenhaltungen:
- GB-A- 2 264 369
- 2ND IEEE ICFS, 28.März 1993 - 1.April 1993 SAN FRANSICO, Seiten 934-937, XP 000371530 TEODORESCU 'A new strategy etc...'
- PROCEEDINGS OF THE INTERNATIONAL CONFERENCE ON CONTROL AND APPLICATIONS. (ICCON), JERUSALEM, APR. 3 - 6, 1989, Nr. -, 3.April 1989 INSTITUTE OF ELECTRICAL AND ELECTRONICS ENGINEERS, Seiten TP-6-4, 1-05, XP 000090579 NEAT G W ET AL 'A HYBRID ADAPTIVE APPROACH FOR DRUG DELIVERY SYSTEMS'

## Beschreibung

Bei vielen Regelstrecken ist für extreme Betriebszustände, die zum Beispiel aufgrund von in der Regelstrecke auftretenden Fehlern entstehen, ein besonders schnelles Reagieren des Reglers erforderlich, um zum Beispiel eine Havarie der Regelstrecke zu vermeiden. Bei bekannten Fuzzy Controllern bzw. Fuzzy Reglern wird beim Auftreten solcher extremen Betriebszustände vielfach ein Ausschalten des gesamten Fuzzy Controllers oder ein Umschalten auf einen Notbetrieb bewirkt, bei dem der Fuzzy Controller selbst praktisch keine Funktion mehr erfüllt. Nachteilig ist hierbei, daß es in solchen Situationen zu sogenannten "harten Übergängen" kommt und keine differenzierte, durch das linguistische Protokoll des Fuzzy Controllers festgelegte Reaktion möglich ist.

Aus der deutschen Zeitschrift atp-Automatisierungstechnische Praxis 34 (1992) 4, Seiten 176 bis 184 und 5, Seiten 239 bis 246 ist ein Fuzzy Regler bekannt, bei dem alle Regeln prinzipiell auf die gleiche Weise und damit im wesentlichen gleich schnell verarbeitet werden.

Die der Erfindung zugrundeliegende Aufgabe besteht nun darin, eine Vorrichtung für einen Fuzzy Regler anzugeben, mit der in Extremsituationen eine besonders schnelle aber trotzdem differenzierte Reaktion des Fuzzy Reglers möglich ist, wobei die gewünschte Reaktion durch das linguistische Protokoll festgelegt ist.

Diese Aufgabe wird durch die Merkmale des Patentanspruchs 1 erfindungsgemäß gelöst.

Der Vorteil der Erfindung besteht insbesondere darin, daß hierfür nur ein geringer schaltungstechnischer Mehraufwand erforderlich ist.

Die Ansprüche 2 bis 5 betreffen vorteilhafte Ausgestaltungen der erfindungsgemäßen Anordnung, wobei sich der Gegenstand von Anspruch 3 durch eine besonders kurze Reaktionszeit auszeichnet.

Die Erfindung wird im folgenden anhand der Zeichnung näher erläutert. Dabei zeigt:
- Figur 1: ein Blockschaltbild zur Erläuterung der Erfindung und
- Figur 2: ein Blockschaltbild zu einer bevorzugten Ausgestaltung der Erfindung.

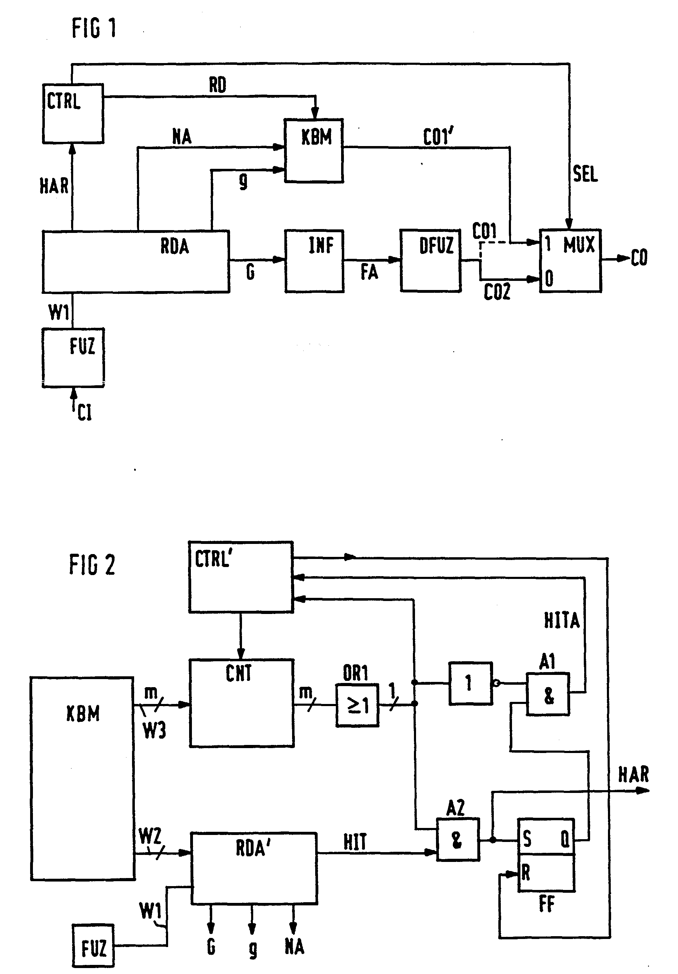

In Figur 1 ist ein vereinfachtes Blockschaltbild mit einer Steuereinheit CTRL, einer Fuzzifikations-Einheit FUZ, einer erweiterten Regeldekodier/auswerte-Einheit RDA, einer Inferenz-Einheit INF, einer Defuzzifikations-Einheit DFUZ, einem Wissensbasisspeicher KBM und einem Multiplexer MUX dargestellt. Aus Gründen der Übersichtlichkeit wurden in Figur 1 nur erfindungswesentliche Beziehungen zwischen den obengenannten Schaltungsteilen durch Verbindungslinien bzw. Signalleitungen dargestellt.

In der Fuzzifikations-Einheit FUZ werden aus scharfen Eingangswerten CI Werte W1 für die Regeldekodier/auswerte-Einheit RDA gebildet.

Die erweiterte Regeldekodier/auswerte-Einheit RDA liefert neben den hinsichtlich der linguistischen Werte der Ausgangsvariablen aggregierten Regelgewichten G, einem Treffersignal HIT (siehe Fig. 2) für eine jeweilige beliebige Regel, einem Regelgewicht g für die jeweilige beliebige Regel und einer Nummer NA für einen linguistischen Wert der Ausgangsvariablen einer jeweiligen beliebigen Regel auch ein Treffersignal HAR für eine jeweilige ausgewählte Regel.

Das Regelgewicht gᵢ entspricht dabei dem Wahrheitswert des WENN-Teils einer jeweiligen Regel i. Zur Bildung der aggregierten Regelgewichte Gᵢ, werden jeweils alle Regelgewichte gᵢ von Regeln zusammengefaßt, die im DANN-Teil der jeweiligen Regel zum selben linguistischen Wert der Ausgangsvariablen führen, wobei das Zusammenfassen seriell, durch eine unscharfe ODER-Verknüpfung beispielsweise durch Bildung eines Maximums erfolgt.

In der Inferenzeinheit INF wird aus den aggregierten Regelgewichten G eine unscharfe Ausgangsmenge FA erzeugt und der Defuzzifikationseinheit DFUZ zugeführt.

Die in der erweiterten Regeldekodier/auswerte-Einheit RDA erzeugten Nummern NA und gegebenenfalls auch die Regelgewichte g sind dem Wissensbasisspeicher KBM zugeführt, aus dem scharfe Werte CO1' auslesbar sind, sofern von der Steuereinheit CTRL ein Lesesignal RD vorliegt. Das Lesesignal RD wird von der Steuereinheit gebildet, sobald das Treffersignal HAR eine logische Eins führt, also ein Treffer in einer jeweiligen ausgewählten Regel vorliegt. Abhängig von einem Auswahlsignal SEL, das ebenfalls in der Steuereinheit CTRL erzeugt wird, ist mit Hilfe des Multiplexers MUX entweder der scharfe Wert CO1' oder der scharfe Wert CO2 als scharfer Ausgangswert CO (crisp output)) der Vorrichtung auswählbar.

Sowohl die ausgewählten Regeln als auch die nicht ausgewählten Regeln bestehen aus einem Bedingungsteil (WENN-Teil) und einem Folgeteil (DANN-Teil).

Im Wissensbasisspeicher KBM sind ausgewählte und nicht ausgewählte Regeln voneinander unterscheidbar gespeichert. Dies kann beispielsweise dadurch geschehen, daß hierfür bei jeder Regel ein entsprechendes Markierungsbit vorgesehen wird oder daß die ausgewählten Regeln direkt oder indiziert als Block adressierbar sind. In den letzten beiden Fällen genügt eine Blockanfangsadresse und die Anzahl der ausgewählten Regeln. Die Nummer NA und gegebenenfalls auch ein einzelnes Bit des jeweiligen Regelgewichts g bis hin zum gesamten Wort des jeweiligen Regelgewichts g sind beispielsweise als Relativadresse verwendet. Die auf diese Weise adressierten Speicherzellen des Wissensbasisspeichers KBM enthalten fest vorgegebene Ausgangswerte als scharfe Werte CO1', die über den Multiplexer MUX als scharfe Ausgangswerte CO der Vorrichtung ausgewählt werden können. Diese Werte CO1' sind sehr schnell erzeugbar, da eine Inferenz und Defuzzifikation hierbei völlig entfällt.

Die ausgewählten Regeln sind so zu formulieren, daß die maximal mögliche Zahl von ausgewählten Regeln gleich der maximal codierbaren Zahl der linguistischen Werte der Ausgangsvariablen bzw. deren Nummern NA ist und daß in jeder möglichen Situation höchstens eine einzige ausgewählte Regel zutreffen kann, bei der das jeweilige Regelgewicht g ungleich Null ist. Die Steuerung CTRL bewirkt nun, daß die ausgewählten Regeln, die für Extremzustände vorgesehen sind, zeitlich vor den nicht ausgewählten Regeln adressiert werden. Die Steuerung CTRL bewirkt ferner, daß, sofern bei einer der ausgewählten Regeln der Bedingungsteil erfüllt ist, ein scharfer Wert CO1' auf der Basis der ausgewählten Regeln gebildet wird. Nachdem der scharfe Wert CO1' auf der Basis der ausgewählten Regeln gebildet ist, kann entweder die Verarbeitung abgebrochen werden oder aber die Verarbeitung auf der Basis der nicht ausgewählten Regeln vorgenommen werden und der so ermittelte weitere scharfe Wert C02 anstelle des groben aber schnell ermittelten scharfen Wertes CO1' als scharfer Ausgangswert der Vorrichtung ausgewählt werden.

Da die Anzahl der ausgewählten Regeln, die ja die Reaktion in Extremzuständen beschreiben, in den meisten Fällen relativ gering gegenüber der Anzahl der nicht ausgewählten Regeln ist, ist diese Art der besonders schnellen Erzeugung eines scharfen Ausgangswertes in den meisten Fällen anwendbar.

Alternativ hierzu ist in Figur 1 eine weitere Ausgestaltung der Erfindung gestrichelt eingezeichnet. Hierbei wird anstelle des scharfen Wertes CO1' der scharfe Wert CO1 dem Multiplexer MUX zugeführt, wobei der scharfe CO1 in gleicher Weise wie der scharfe Wert C02, also ebenfalls mit Hilfe der Inferenz-Einheit INF und der Defuzzifikations-Einheit, jedoch zeitlich nacheinander gebildet wird, wobei ebenfalls die ausgewählten Regeln zuerst verarbeitet werden. Der Wert CO1 ist hierbei schneller verfügbar als bei bekannten Fuzzy Reglern, da nicht alle Regeln, sondern nur die ausgewählten Regeln, eines im Wissensbasisspeicher KBM gespeicherten linguistischen Protokolls zur Bildung des Wertes CO1 herangezogen werden und eine genauere Bewertung mit allen Regeln erst danach erfolgt.

Hier ist die maximale Anzahl ausgewählter Regeln nicht auf die maximal codierbare Zahl linguistischer Werte beschränkt. Auch die zweite zur Bildung von CO1' oben genannte Einschränkung gilt hier nicht, d. h. beliebig viele der ausgewählten Regeln können mit einem Regelgewicht g ungleich Null zur Bildung von CO1 beitragen.

In Figur 2 ist die erweiterte Regeldecodier/auswerte-Einheit RDA, die aus einer Regeldecodier/auswerte-Einheit RDA' und weiteren Schaltungsteilen besteht, im Zusammenspiel mit der Fuzzifikationseinheit FUZ und dem Wissensbasispeicher KBM dargestellt. Bei den weiteren Schaltungsteilen handelt es sich um eine Steuereinheit CTRL' für die erweiterte Regeldecodier/auswerte-Einheit RDA, einen Rückwärtszähler RCNT,eine ODER-Schaltung OR1, UND-Schaltungen Al und A2, ein Halteglied FF (Flipflop) und einer Inverterschaltung I.

Einem Ladeeingang LD des Rückwärtszählers RCNT wird aus dem Wissensbasisspeicher KBM die Anzahl der ausgewählten Regeln W3 zugeführt, wobei die erforderliche Wortbreite m beträgt, wenn die Zahl der ausgewählten Regeln kleiner gleich 2^{m} beträgt. Ein Zähleingang CNT des Rückwärtszählers RCNT wird durch die Steuerung CRTL' mit Zählimpulsen versorgt. Der m Bit breite Ausgang wird durch die ODER-Schaltung OR1 bitweise ODER-verknüpft und das Ausgangssignal der ODER-Schaltung OR1 der Steuerung CTRL', dem Eingang des Inverters I und einem ersten Eingang der UND-Schaltung A2 zugeführt. Die Regeldekodier/auswerte-Einheit RDA' wird mit Werten W1 aus der Fuzzifikationsschaltung FUZ und Werten W2 aus dem Wissensbasisspeicher KBM versorgt und liefert unter anderem ein Treffersignal HIT für eine jeweilige beliebige Regel, das einem zweiten Eingang der UND-Schaltung A2 zugeführt wird. Das Treffersignal HIT ist immer dann logisch Eins, wenn der Bedingungsteil einer jeweiligen beliebigen Regel erfüllt ist, d. h. wenn das Gewicht g einer jeweiligen beliebigen Regel ungleich Null ist. Der Ausgang der UND-Schaltung A2 ist mit einem Setz-Eingang S des Haltegliedes FF verbunden und stellt das Treffersignal HAR für eine jeweilige ausgewählte Regel dar. Der Rücksetz-Eingang R erhält ein Rücksetz-Signal aus der Steuerung CTRL'. Der Ausgang Q des Haltegliedes FF ist mit einem ersten Eingang der UND-Schaltung Al und der Ausgang des Inverters I ist mit einem zweiten Eingang der UND-Schaltung Al verbunden, an deren Ausgang ein Treffersignal HITA für mindestens eine ausgewählte Regel anliegt und der Steuerung CTRL' zugeführt wird.

Zu Beginn der Verarbeitung wird dem Rückwärtszähler RCNT der Wert W3 für die Anzahl der ausgewählten Regeln geladen und nach jeder Verarbeitung einer ausgewählten Regel wird der Rückwärtszähler RCNT um Eins dekrementiert, solange bis der Zählerinhalt gleich Null ist und am Ausgang der ODER-Schaltung OR1 eine logische Null anliegt. Falls am Ausgang der ODER-Schaltung OR1 eine logische Null anliegt, wird der zweite Eingang der UND-Schaltung Al durch den Inverter I auf logisch Eins gelegt. Für den Fall daß der Bedingungsteil mindestens einer Regel, in diesem Fall einer ausgewählten Regel, erfüllt ist und gleichzeitig der Inhalt des Rückwärtszählers RCNT ungleich Null ist, wird das Halteglied FF über die UND-Schaltung A2 durch das Treffersignal HAR gesetzt, wobei der Ausgang Q logisch Eins ist und das Treffersignal HITA am Ausgang der UND-Schaltung Al, das der Steuerung CTRL' zugeführt wird, eine logische Eins führt, sobald alle ausgewählten Regeln verarbeitet sind. Zusammenfassend ausgedrückt ist das Treffersignal HITA, nachdem alle ausgewählten Regeln verarbeitet sind und der Bedingungsteil mindestens einer ausgewählten Regel erfüllt war; solange logisch Eins bis die restlichen Teile CTRL' der Steuerung das Halteglied FF über den Rücksetz-Eingang R zurücksetzen, es sei denn, der Ausgang von OR1 geht zuvor auf 1.

## Patentansprüche

1. Vorrichtung zur schnellen Verarbeitung von ausgewählten Fuzzy-Regeln,
- bei der in einem Wissensbasisspeicher (KBM) ausgewählte und nicht ausgewählte Regeln von einander unterscheidbar gespeichert sind,
- bei der eine Steuerung (CTRL) bewirkt, daß alle ausgewählten Regeln zeitlich vor den nicht ausgewählten Regeln adressiert werden und, sofern bei mindestens einer der ausgewählten Regeln der Bedingungsteil erfüllt ist, ein scharfer Wert (CO1, CO1') ausschließlich auf der Basis der ausgewählten Regeln gebildet wird und
- bei der dieser scharfe Wert (CO1, CO1') zumindest zeitweise als Ausgangswert (CO) der Vorrichtung ausgewählt ist.

2. Vorrichtung nach Anspruch 1,
- bei der ein weiterer scharfer Wert (C02) auf der Basis der nicht ausgewählten Regeln erst erzeugt ist, nach dem entweder der scharfe Wert (CO1, CO1') gebildet ist oder bei keiner der ausgewählten Regeln der Bedingungsteil erfüllt ist,
- bei der zunächst der scharfe Wert (CO1, CO1') als Ausgangswert (CO) der Vorrichtung ausgewählt ist, falls ein solcher scharfer Wert (CO1,CO1') vorliegt, und daß der weitere scharfe Wert (CO2) als scharfer Ausgangswert (CO) der Vorrichtung ausgewählt ist, sobald dieser weitere scharfe Wert feststeht, wobei die Verarbeitungszeit für die Erzeugung des scharfen Wertes (CO1, CO1'), falls ein solcher vorliegt, geringer ist als die Verarbeitungszeit für die Erzeugung des weiteren scharfen Wertes (CO2).

3. Vorrichtung nach Anspruch 1 oder 2,
- bei der aus Nummern (NA) für linguistische Werte der Ausgangsvariablen und gegebenenfalls aus Regelgewichten (g) Adressen für den Wissensbasisspeicher (KBM) gebildet sind und
- bei der diese Adressen zur Adressierung von Speicherplätzen dienen, die bereits vorher festgelegte scharfe Werte (CO1') für den Ausgang der Vorrichtung enthalten.

4. Vorrichtung nach einem der Ansprüche 1 bis 3,
- bei der einem Ladeeingang (LD) eines Rückwärtszählers (RCNT) die im Wissensbasisspeicher gespeicherte Anzahl (W3) der ausgwählten Regeln zugeführt ist und die Steuerung (CTRL') der Regeldecodier/auswerte-Einheit (RDA) nach der Verarbeitung einer jeweiligen Regel ein Signal an einen Zähleingang (CNT) des Rückwärtszählers liefert bis alle ausgewählten Regeln verarbeitet sind,
- bei der das Ausgangssignal des Rückwärtszählers bitweise ODER-verknüpft (OR1) und anschließend der Steuerung (CTRL')der Regeldecodier/auswerte-Einheit, einem Eingang einer Inverterschaltung (I) sowie einem ersten Eingang einer UND-Schaltung (A2) zugeführt ist,
- bei dem einem zweiten Eingang der UND-Schaltung (A2) ein in einer Regeldekodier/auswerte-Einheit (RDA') gebildetes Treffersignal (HIT) zugeführt ist und der Ausgang der UND-Schaltung (A2) mit dem Setz-Eingang (S) eines Haltegliedes (FF), dessen Rücksetz-Eingang (R) mit der Steuerung (CTRL') der Regeldecodier/auswerte-Einheit und dessen Ausgang (Q) mit dem ersten Eingang einer weiteren UND-Schaltung (A1) beschaltet ist, verbunden ist und
- bei der ein Ausgang der Inverterschaltung (I) mit einem zweiten Eingang der weiteren UND-Schaltung (A1) verbunden ist und der Ausgang der weiteren UND-Schaltung ein weiteres Treffersignal (HITA) führt, das der Steuerung (CTRL') der Regeldecodier/auswerte-Einheit zugeführt ist.

5. Vorrichtung nach einem der Ansprüche 1 bis 4,
bei der mit Hilfe eines Multiplexers (MUX) abhängig von einem in einer Steuereinheit (CTRL) gebildeten Steuersignal (SEL) entweder der aus den ausgewählten Regeln ermittelte scharfe Wert (CO1, CO1') oder der weitere scharfe Wert (C02) als scharfer Ausgangswert (CO) der Vorrichtung ausgewählt ist.

## Claims

1. Device for the fast processing of selected fuzzy rules,
- in which selected and non-selected rules are stored in a knowledge base memory (KBM) such that they can be distinguished from one another,
- in which a controller (CTRL) has the effect that all the selected rules are addressed prior to the non-selected rules and, provided the condition part is fulfilled in at least one of the selected rules, a sharp value (CO1, CO1') is formed exclusively on the basis of the selected rules and
- in which this sharp value (CO1, CO1') is selected, at least from time to time, as the output value (CO) of the device.

2. Device according to Claim 1,
- in which a further sharp value (CO2) is generated on the basis of the non-selected rules only after either the sharp value (CO1, CO1') has been formed or the condition part is fulfilled in none of the selected rules,
- in which, firstly, the sharp value (CO1, CO1') is selected as the output value (CO) of the device if such a sharp value (CO1, CO1') is present, and the further sharp value (CO2) is selected as the crisp output value (CO) of the device as soon as this further sharp value is stationary, the processing time for the generation of the sharp value (CO1, CO1'), if one such is present, being lower than the processing time for the generation of the further sharp value (CO2).

3. Device according to Claim 1 or 2,
- in which addresses for the knowledge base memory (KBM) are formed from numbers (NA) for linguistic values of the output variables and, if appropriate, - from rule weightings (g) and
- in which these addresses serve for the addressing of memory locations which contain already previously defined sharp values (CO1') for the output of the device.

4. Device according to one of Claims 1 to 3,
- in which a load input (LD) of a reverse counter (RCNT) is fed the number (W3) of the selected rules stored in the knowledge base memory, and the controller (CTRL') of the rule decoder/evaluation unit (RDA), following the processing of a respective rule, supplies a signal to a counting input (CNT) of the reverse counter until all the selected rules have been processed,
- in which the output signal of the reverse counter is OR linked (OR1) bit by bit and subsequently fed to the controller (CTRL') of the rule decoder/evaluation unit, to an input of an inverter circuit (I) and to a first input of an AND circuit (A2),
- in which a second input of the AND circuit (A2) is fed a hit signal (HIT) formed in a rule decoder/evaluation unit (RDA'), and the output of the AND circuit (A2) is connected to the set input (S) of a hold element (FF), whose reset input (R) is wired to the controller (CTRL') of the rule decoder/evaluation unit and whose output (Q) is wired to the first input of a further AND circuit (A1) and
- in which an output of the inverter circuit (I) is connected to a second input of the further AND circuit (A1), and the output of the further AND circuit carries a second hit signal (HITA), which is fed to the controller (CTRL') of the rule decoder/evaluation unit.

5. Device according to one of Claims 1 to 4, in which, with the aid of a multiplexer (MUX) and depending on a control signal (SEL) formed in a control unit (CTRL), either the sharp value (CO1, CO1') determined from the selected rules or the further sharp value (CO2) is selected as the crisp output value (CO) of the device.

## Revendications

1. Dispositif de traitement rapide de règles sélectionnées en logique floue.
- dans lequel des règles sélectionnées et non-sélectionnées sont enregistrées de façon distincte dans une mémoire de base de connaissances (KBM),
- dans lequel une commande (CTRL) agit de sorte que toutes les règles sélectionnées sont adressées antérieurement dans le temps aux règles non-sélectionnées et de sorte que, dans la mesure où pour au moins une des règles sélectionnées l'élément de condition est rempli, une valeur nette (CO1, CO1') est constituée exclusivement sur la base des règles sélectionnées et
- dans lequel cette valeur nette (CO1, CO1') est sélectionnée au moins temporairement en tant que valeur de sortie (CO) du dispositif.

2. Dispositif selon la revendication 1,
- dans lequel une autre valeur nette (CO2) est générée sur la base des règles non sélectionnées seulement après que soit la valeur nette (CO1, CO1') est constituée soit l'élément de condition n'est rempli pour aucune règle sélectionnée.
- dans lequel la valeur nette (CO1, CO1') est en premier lieu sélectionnée en tant que valeur de sortie (CO) du dispositif, au cas où une telle valeur nette (CO1, CO1') est présente, et dans lequel l'autre valeur nette (CO2) est sélectionnée en tant que valeur de sortie nette (CO) du dispositif dès que cette autre valeur nette est déterminée, le temps de traitement pour la génération de la valeur nette (CO1, CO1'), au cas où une telle valeur est présente, étant inférieur au temps de traitement pour la génération de l'autre valeur nette (CO2).

3. Dispositif selon la revendication 1 ou 2,
- dans lequel des adresses sont constituées pour la mémoire de base de connaissances (KBM) à partir des numéros (NA) pour des valeurs linguistiques des variables de sortie et le cas échéant à partir des poids de règle (g) et
- dans lequel ces adresses servent à l'adressage de zones d'enregistrement, qui contiennent déjà des valeurs nettes (CO1') prédéterminées pour la sortie du dispositif.

4. Dispositif selon l'une des revendications 1 à 3,
- dans lequel le nombre (W3) de règles sélectionnées qui est enregistré dans la mémoire de base de connaissances est appliqué à l'entrée de charge (LD) d'un compteur inverse (RCNT) et la commande (CTRL') de l'unité de décodage/analyse des règles (RDA) fournit après le traitement d'une règle respective un signal à une entrée de comptage (CNT) du compteur inverse jusqu'à ce que toutes les règles sélectionnées soient traitées,
- dans lequel le signal de sortie du compteur inverse est relié par OU (OR1), bit par bit, et est ensuite appliqué à la commande (CTRL') de l'unité de décodage/analyse de règles, à une entrée d'un circuit d'inversion (I) ainsi qu'à une première entrée d'un circuit ET (A2),
- dans lequel un signal de correspondance (HIT) constitué dans une unité de décodage/analyse des règles (RDA') est appliqué à une deuxième entrée du circuit ET (A2), et la sortie du circuit ET (A2) est reliée à l'entrée de positionnement (S) d'un opérateur de maintien (FF), dont l'entrée de remise à zéro ( R ) est reliée à la commande (CTRL') de l'unité de décodage/analyse des règles et dont la sortie (Q) est connectée à la première entrée d'un autre circuit ET (A1) et
- dans lequel une sortie du circuit de l'inverseur (I) est reliée à une deuxième entrée de l'autre circuit ET (A1) et la sortie de l'autre circuit ET porte un autre signal de correspondance (HITA), qui est appliqué à la commande (CTRL') de l'unité de décodage/analyse des règles.

5. Dispositif selon l'une des revendications 1 à 4,
dans lequel, à l'aide d'un multiplexeur (MUX) et indépendamment d'un signal de commande (SEL) constitué dans une unité de commande (CTRL), soit une valeur nette (CO1, CO1') déterminée à partir des règles sélectionnées, soit l'autre valeur nette (CO2) est sélectionnée en tant que valeur de sortie nette (CO) du dispositif.
